# EUROPEAN PATENT APPLICATION

(11) **EP 4 226 781 A1**
(43) Date of publication of application: **16.08.2023**
(21) Application number: 21960094.7
(22) Date of filing: 23.12.2021
(51) Int. Cl.: A24F 40/10, A24F 40/46

(54) **ATOMIZATION DEVICE HAVING GOOD ATOMIZATION EFFECT**

(71) Applicant: Shenzhen Huachengda Precision Industry Co., Ltd., Shenzhen, Guangdong 518000 (CN)
(72) Inventor: CHEN, Ping, Shenzhen, Guangdong 518000 (CN)
(74) Representative: Westphal, Mussgnug & Partner, Patentanwälte mbB
(86) International application number: PCT/CN2021/140964
(87) International publication number: WO 2023/115481

(57) **Abstract**

The present invention provides an atomization device including a shell, an atomizing core, and electrodes. The atomizing core includes a heating unit and a liquid transfer unit. The liquid transfer unit includes an air guide part and a base. An air flow chamber is formed between the air guide part and the base. A heating part is disposed on an inner wall of the air flow chamber and is in contact with the liquid transfer unit. A liquid storage cavity leads to a liquid inlet part of the liquid transfer unit, an air inlet passage is communicated with an air inlet, and an air outlet passage is communicated with an air outlet, such that when the liquid inlet part of the liquid transfer unit contacts liquid, the liquid is transferred by the liquid transfer unit onto the heating parts to be heated to generate smoke, and an external air flow sequentially passes through the air inlet passage, the air inlet, the air flow chamber, the air outlet and the air outlet passage to take the smoke out of the atomization device. Due to the fact that the air flow chamber of the atomizing core of the atomization device is disposed in the liquid transfer unit made of a porous material and the heating part of the heating unit is disposed in the air flow chamber, the volume, flow rate and path of the air flow are determined mainly by the structure of the liquid transfer unit without being affected by other parts and the assembly relation of the atomization device, thereby facilitating ensuring good and uniform atomization effect of the atomization device.

## Description

### FIELD

The invention relates to the technical field of atomization, in particular to an atomization device with a good atomization effect.

### BACKGROUND

Atomization devices typically includes a core part (atomizing core) and other parts. The atomizing core generally comprises a liquid transfer unit and a heating unit. The main function of the liquid transfer unit is to transfer liquid onto the heating unit where the liquid is heated and atomized. When applied to an atomizer of e-cigarettes, the atomizing core is mainly used for transferring, heating and evaporating e-liquid.

In conventional atomization devices, an atomization chamber and an air inlet and an air outlet of the atomization chamber are defined by the liquid transfer unit of the atomizing core and other parts, and an air flow passes through the atomization chamber to take away smoke generated by heating of the heating unit. The size of the atomization chamber and the air inlet and outlet of the atomization chamber is determined by the liquid transfer unit and other parts. The air flow entering the atomization area during the atomization process has an influence on the atomization effect, and the volume and flow rate of the air flow also have an indirect influence on the atomization effect and stability. Therefore, the assembly of the atomizing core or the structure of other parts may affect the volume, flow rate and path of the air flow, which in turn affects the atomization effect, making it difficult to guarantee the atomization effect of the atomization devices.

### SUMMARY

In view of the defects in the related art, the technical issue to be addressed by the invention is to provide an improved atomization device with a good atomization effect.

The technical solution adopted by the invention to solve the above technical issue is to provide an atomization device comprising a shell, an atomizing core and electrodes. A liquid storage cavity, an air inlet passage and an air outlet passage are disposed in the shell. The atomizing core comprises a heating unit, and a liquid transfer unit which is used for absorbing and transferring liquid and is made of a porous material. The liquid transfer unit comprises an air guide part, and a base which is connected to and surrounds the air guide part. A gap between the air guide part and the base forms an air flow chamber. The liquid transfer unit is provided with an air inlet in communication with the air flow chamber, an air outlet in communication with the air flow chamber, and a liquid inlet part to be in contact with the liquid. The heating unit comprises a heating part which generates heat when energized, and electrical connection parts for transmitting power to the heating part. The heating part is disposed on an inner wall of the air flow chamber and is in contact with the liquid transfer unit, the electrical connection parts extend out of the air flow chamber, and the electrodes are disposed on the shell, and each of the electrodes has an end electrically connected to a corresponding one of the electrical connection parts and an opposite end for being electrically connected to an external circuit.

The liquid storage cavity leads to the liquid inlet part of the liquid transfer unit, the air inlet passage is in communicated with the air inlet, and the air outlet passage is communicated with the air outlet, such that when the liquid inlet part of the liquid transfer unit contacts the liquid, the liquid is transferred by the liquid transfer unit onto the heating part and is heated to generate smoke. An external air flow sequentially passes through the air inlet passage, the air inlet, the air flow chamber, the air outlet and the air outlet passage to take the smoke out of the atomization device.

Preferably, the air flow chamber is a ring space, or a ring space with angles.

Preferably, the atomization device comprises a sealing element disposed in the shell, at least one side of the air flow chamber is open outwards, the sealing element seals the open side of the air flow chamber of the liquid transfer unit, and an air outlet connector is disposed at a position, corresponding to the air outlet of the liquid transfer unit, of the sealing element and is connected to the air outlet passage of the shell, thereby achieving communication and seal between the air outlet passage and the air outlet.

Preferably, along an axis surrounded by the air flow chamber, two sides of the air flow chamber are open, a receiving cavity is formed in the sealing element, the atomizing core is disposed in the receiving cavity, and a wall of the receiving cavity covers and seals the open side of the air flow chamber of the liquid transfer unit.

Preferably, the receiving cavity of the sealing element is open downwards, the atomizing core is placed in the receiving cavity through the opening of the receiving cavity, and the air inlet is formed in a lower side of the liquid transfer unit.

The shell comprises a shell body and a pedestal, the liquid storage cavity and the air outlet passage are disposed in the shell body, the air inlet passage is disposed in the pedestal, one end of the shell body is open, and the sealing element and the atomizing core are disposed in the shell body.

The pedestal is mounted at the open end of the shell body, and is connected to a lower side of the sealing element, such that the air inlet is sealed with respect to the air inlet passage.

Preferably, electrode connection holes are formed in a side, facing the pedestal, of the sealing element, the electrical connection parts of the heating unit are bent into the electrode connection holes, and one end of each said electrode is inserted through the pedestal and into a corresponding one of the electrode connection holes to be in contact and electrical connection with a corresponding one of the electrical connection parts.

Preferably, the base comprises a first part and a second part, the first part and the second part surround two sides of the air guide part respectively, and one end of the first part and one end of the second part are joined together and are connected to the air guide part.

Preferably, in the air flow chamber, the heating part is disposed on the base, and the liquid inlet part is disposed on an outer side of the base.

Preferably, the air inlet part is a liquid inlet recess formed in the outer side of the base.

Preferably, in the air flow chamber, the heating part is disposed on the air guide part.

Preferably, the liquid inlet part is a liquid inlet recess formed in an outer side of the air guide part.

Preferably, the air inlet is formed in a joint of the base and the air guide part.

Preferably, the other end of the first part and the other end of the second part cooperatively define the air outlet.

Preferably, the shell comprises a shell body and a pedestal, the liquid storage cavity and the air outlet passage are disposed in the shell body, the air inlet passage is disposed in the pedestal, one end of the shell body is open, the atomizing core is disposed in the shell body, and the pedestal is disposed at the open end of the shell body.

The air inlet is formed in a lower side of the liquid transfer unit, the liquid transfer unit comprises a support part which is connected to the base and/or the air guide part, protrudes downwards and is used for elevating the air inlet.

The shell comprises a shell body and a pedestal, one end of the shell body is open, the atomizing core is disposed on the shell body, and the pedestal is disposed at the open end of the shell body.

The support part downwards presses against the pedestal to space the air inlet apart from the pedestal.

By implementing the technical solution, the invention has at least the following beneficial effects: due to the fact that the air flow chamber of the atomizing core of the atomization device is disposed in the liquid transfer unit made of a porous material and the heating part of the heating unit is disposed in the air flow chamber, the volume, flow rate and path of the air flow are determined mainly by the structure of the liquid transfer unit without being affected by other parts and the assembly relation of the atomization device, thereby facilitating ensuring good and uniform atomization effect of the atomization device.

### BRIEF DESCRIPTION OF THE DRAWINGS

To more clearly explain the technical solutions of the embodiments of the invention, drawings used for describing the embodiments of the invention or the prior art will be briefly introduced below. Obviously, the drawings in the following description merely illustrate some embodiments of the invention, and those ordinarily skilled in the art can obtain other drawings according to the following ones without creative labor.
FIG. 1 is a perspective view of an atomization device according to one embodiment of the invention.
FIG. 2 is an exploded view of the atomization device of FIG. 1.
FIG. 3 is a perspective, sectional view of the atomization device of FIG. 1.
FIG. 4 is an enlarged view of a portion Q of FIG. 3.
FIG. 5 is a sectional view of the atomization device of FIG. 1, taken along line C-C thereof (the solid arrows indicate the flow direction of liquid, and the hollow arrows indicate the flow direction of gas).
FIG. 6 is a perspective view of an atomizing core of the atomization device according to one embodiment of the invention.
FIG. 7 is a perspective view of a liquid transfer unit of the atomizing core of FIG. 6.
FIG. 8 is a perspective view of a heating unit of the atomizing core of FIG. 6.
FIG. 9 is a sectional view of FIG. 6, taken along line A-A thereof.
FIG. 10 is a perspective view of an atomizing core of the atomization device according to another embodiment of the invention.
FIG. 11 is a perspective view of a liquid transfer unit of the atomizing core of FIG. 10.
FIG. 12 is a perspective view of a heating unit of the atomizing core of FIG. 10.
FIG. 13 is a sectional view of FIG. 10, taken along line B-B thereof.
FIG. 14 is a perspective view of a liquid transfer unit of the atomizing core of the atomization device according to another embodiment of the invention.

Reference numerals: 0, atomizing core; 1, liquid transfer unit; 11, base; 111, first part; 112, second part; 12, air guide part; 13, support part; 14, liquid inlet part; 15, air inlet; 16, air outlet; 17, air flow chamber; 2, heating unit; 21, heating part; 22, electrical connection part; 3, shell; 31, shell body; 32, pedestal; 33, air outlet passage; 34, air inlet passage; 35, liquid storage cavity; 4, sealing element; 41, air outlet connector; 42, electrode connecting hole; 43, receiving cavity; 5, electrode.

### DESCRIPTION OF THE EMBODIMENTS

For a better understanding of the technical features, purposes and effects of the invention, the specific implementations of the invention are described in detail with reference to the accompanying drawings. It should be understood that terms such as "upper", "lower", "longitudinal", "cross", "top", "bottom", "inner" and "outer" are used to indicate directional or positional relations, and configuration and operation in specific directions based on the accompanying drawings merely for the purpose of facilitating the description of the technical solution of the invention, and do not indicate that devices or elements referred to must be in a specific direction, so they should not be construed as limitations of the technical solution of the invention. It should be noted that, unless otherwise expressly stated and defined, terms such as "mount", "link", "connect", and "dispose" in the specification should be broadly understood. For example, "connect" may refer to fixed connection, detachable connection or integrated connection; or, direct connection, indirect connection through an intermediate medium, or internal connection or interaction of two elements. When one element is referred to as being "over" or "under" the other element, it may be "directly" or "indirectly" located on the other element, or one or more intermediate elements may exist between these two elements. Terms such as "first", "second" and "third" in the specification are merely for the purpose of conveniently describing the technical solution of the invention, and should not be construed as indicating or implying relative importance or implicitly indicating the number of technical features referred to. So, when one feature is defined by the terms such as "first", "second" and "third", it may explicitly or implicitly indicate the inclusion of one or more said features. Those ordinarily skilled in the art can understand the specific meanings of these terms in the invention as the case may be.

To gain a thorough understanding of the embodiments of the invention, specific details such as system structures and techniques are given below for the purpose of description rather than restriction. It is obvious for those skilled in the art that the invention can also be implemented in other embodiments without these specific details. In other cases, a detailed description of commonly known systems, devices, circuits and methods is omitted to ensure that the invention can be described without being interfered by unnecessary details.

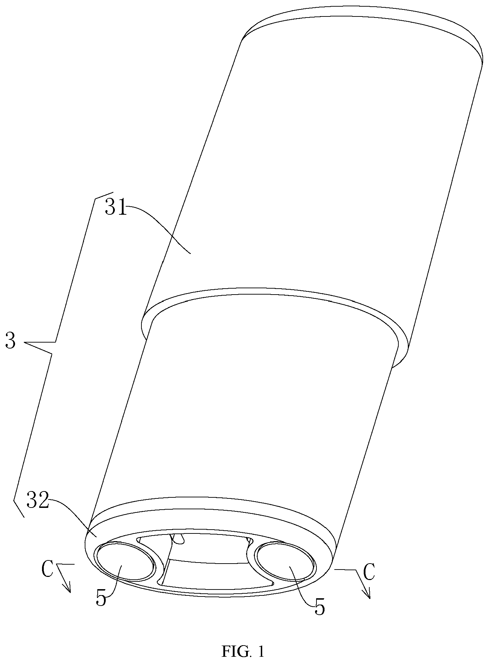

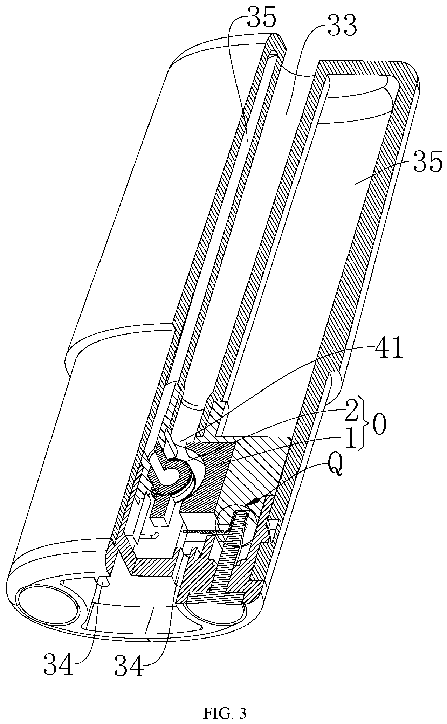

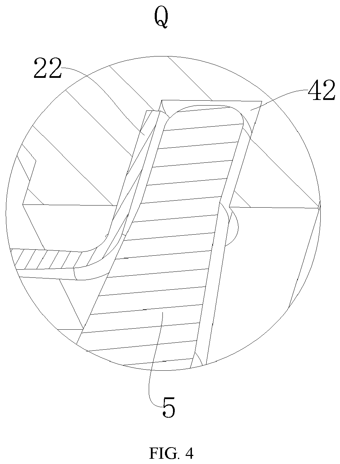

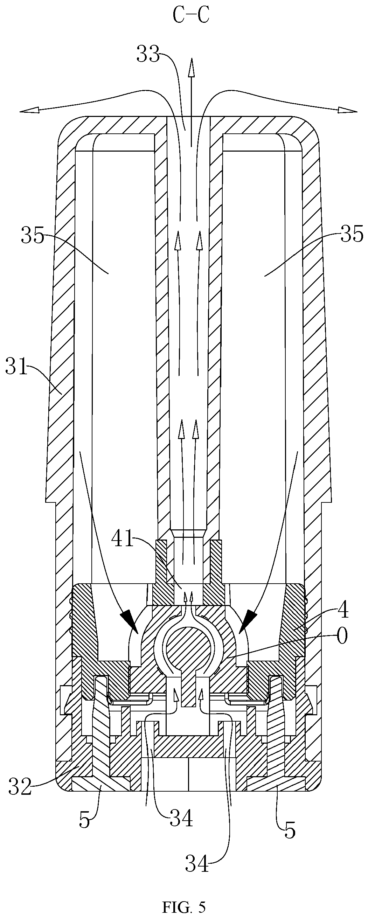

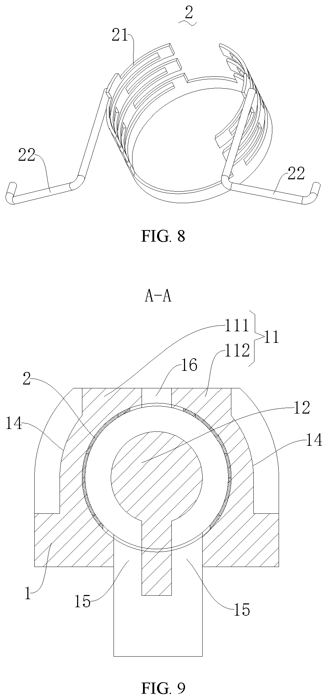

Referring to FIG. 1 through FIG. 9, one embodiment of the invention provides an atomization device, which includes a shell 3, an atomizing core 0 and electrodes 5. A liquid storage cavity 35, an air inlet passage 34 and an air outlet passage 33 are disposed in the shell 3. The atomizing core 0 includes a heating unit 2, and a liquid transfer unit 1 for absorbing and transferring liquid 1. The liquid transfer unit 1 is made of a porous material (also referred to as micro-porous material) with many micro-pores for absorbing and transferring liquid, such as a porous ceramic material. The liquid transfer unit 1 comprises an air guide part 12, and a base 11 which is connected to and surrounds the air guide part 12. An air flow chamber 17 is formed by a gap between the air guide part 12 and the base 11. The liquid transfer unit 1 is provided with an air inlet 15 in flow communication with the air flow chamber 17, an air outlet 16 in flow communication with the air flow chamber 17, and a liquid inlet part 14 to be in contact with liquid. The heating unit 2 comprises a heating part 21 which generates heat when energized, and electrical connection parts 22 which are connected to the heating part 21 for transmitting currents to the heating part 21. The heating part 21 is disposed on an inner wall of the air flow chamber 17 and is in contact with the liquid transfer unit 1. The electrical connection parts 22 extend out of the air flow chamber 17. The electrodes 5 are disposed on the shell 3, and each electrode 5 has an end electrically connected to a corresponding one of the electrical connection parts 22 of the heating unit 2, and an opposite end for being electrically connected to an external circuit.

The liquid storage cavity 35 of the shell 3 leads to the liquid inlet part 14 of the liquid transfer unit 1 of the atomizing core 0, the air inlet passage 34 of the shell 3 is communicated with the air inlet 15 of the atomizing core 0, and the air outlet passage 33 of the shell 3 is communicated with the air outlet 16 of the atomizing core 0, such that when the liquid inlet part 14 of the liquid transfer unit 1 contacts liquid, the liquid is transferred by the liquid transfer unit 1 onto the heating part 21 to be heated to generate smoke, and an external air flow sequentially passes through the air inlet passage 34, the air inlet 15, the air flow chamber 17, the air outlet 16 and the air outlet passage 33 to take the smoke out of the atomization device. The porous material may be a porous ceramic material.

In the atomization device of the present invention, by means of the contact of the liquid inlet part of the liquid transfer unit 1 of the atomizing core 0 with the liquid, the liquid is transferred by the liquid transferred unit 1 onto the heating part 21 of the heating unit 2 and is heated and atomized into smoke, and an air flow passes through an atomization surface (a section of the heating part 21 of the heating unit 2 that heats liquid to generate smoke) to take the smoke out of the atomization device.

The atomization device provided by the invention has the following beneficial technical effects:

1. Due to the fact that the air flow chamber 17 of the atomizing core 0 of the atomization device is disposed within the liquid transfer unit 1 made of a porous material and the heating part 21 of the heating unit 2 is disposed in the air flow chamber 17, the volume, flow rate and path of the air flow are determined mainly by the structure of the liquid transfer unit 1 and is not affected by other parts and the assembly relation of the atomization device, thereby facilitating ensuring good and uniform atomization effect of the atomization device.

2. The liquid transfer unit 1 of the atomizing core 0 of the atomization device is made of a porous material, so the whole air flow chamber 17 is filled with the porous material, and condensate generated in the air flow chamber 17 can be absorbed by the liquid transfer unit 1, thus effectively reducing the quantity of the condensate.

3. In the atomization device, the air flow chamber 17 is determined mainly by the structure of the liquid transfer unit 1 rather than being cooperatively defined by the liquid transfer unit 1 and other parts of the atomization device, so the structure of the atomization device can be simplified, and the atomization device can be assembled easily, quickly, stably and reliably.

The atomization device provided by the invention can be applied in e-cigarettes to heat and atomize e-liquid. The specific working process is as follows: the liquid inlet part of the liquid transfer unit 1 of the atomizing core 0 of the atomization device contacts e-liquid in the atomization device, then the e-liquid is transferred by the liquid transfer unit 1 onto the heating part 21 of the heating unit 2 and is heated and atomized into smoke, and an air flow sequentially passes through the air inlet passage 34, the air inlet 15, the air flow chamber 17, the air outlet 16 and the air outlet passage 33 to take the smoke out of the atomization device for inhalation by a smoker.

Preferably, the liquid transfer unit 1 is formed integrally.

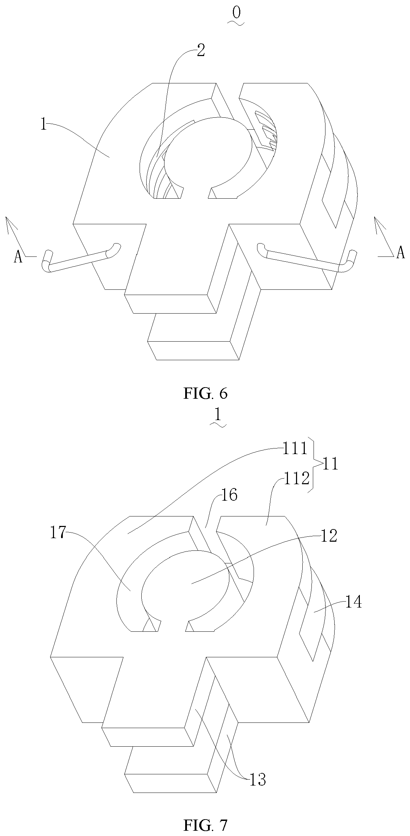

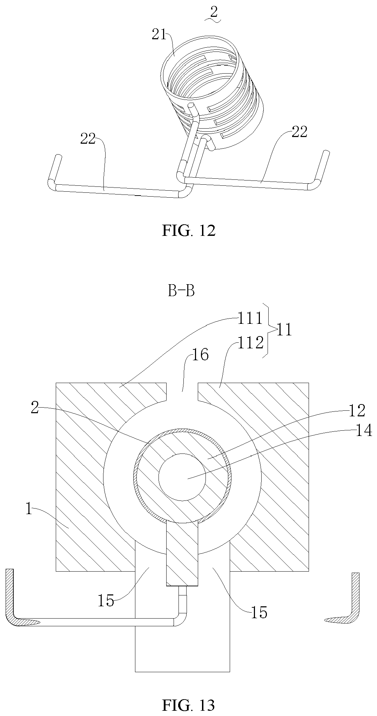

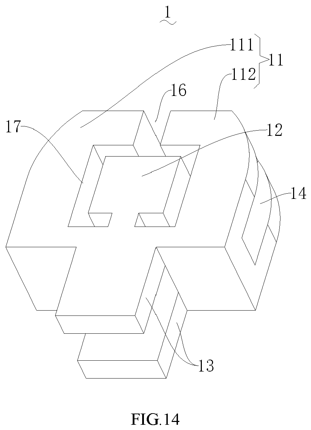

As for the structure of the air flow chamber 17 of the atomizing core 0, the air flow chamber 17 may be in any shape. To facilitate forming the heating unit 2, the air flow chamber 17 may be a ring space (as shown in FIG. 6-FIG. 13). Alternatively, the air flow chamber 17 may be an angular ring space or a polygonal ring space, such as a quadrilateral ring space (as shown in FIG. 14), and in this case, the heating part 21 of the heating unit 2 comprises multiple planar atomization surfaces, such that it becomes easy to control the consistency in forming the heating unit 2, and the porous material can thus be inlaid more stably. The atomization surface and the air flow chamber 17 may be in other shapes, which will not be illustrated here. The heating part 21 of the heating unit 2 comprises at least one heating wire that is curved into a ring-shape.

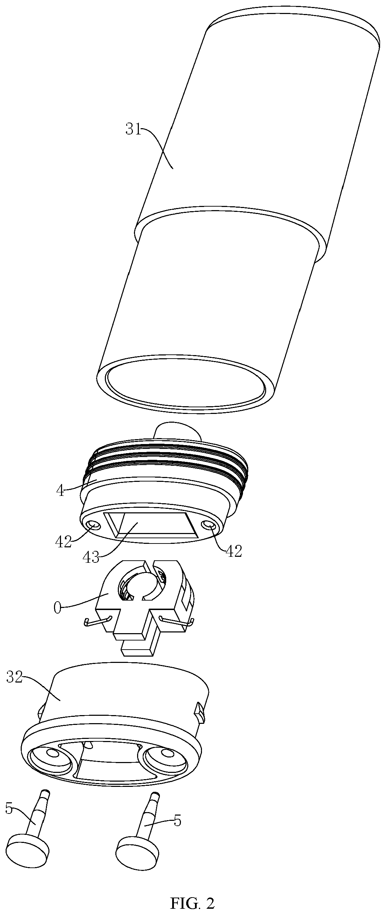

Referring to FIG. 2 through FIG. 5, preferably, the atomization device comprises a sealing element 4 disposed in the shell 3. At least one side of the air flow chamber 17 of the liquid transfer unit 1 is open outwards, and the sealing element 4 covers and seals the open side of the air flow chamber 17. An air outlet connector 41 is disposed at a position, corresponding to the air outlet 16 of the liquid transfer unit 1, of the sealing element 4 and is connected to the air outlet passage 33 of the shell 3, which achieves communication and seal between the air outlet passage 33 and the air outlet 16. In other words, the air outlet passage 33 is connected with the air outlet 16 of the atomizing core 0 through the air outlet connector 41 of the sealing element 4.

Referring to FIG. 6-FIG. 9, preferably, along an axis surrounded by the air flow chamber 17, two sides of the air flow chamber 17 are open, a receiving cavity 43 is formed in the sealing element 4, the atomizing core 0 is disposed in the receiving cavity 43, and a wall of the receiving cavity 43 covers and seals the open sides of the air flow chamber 17 of the liquid transfer unit 1.

Referring to FIG. 2-FIG. 9, preferably, the receiving cavity 43 of the sealing element 4 is open downwards, the atomizing core 0 is placed in the receiving cavity 43 through the opening of the receiving cavity 43, and the air inlet 15 is formed in a lower side of the liquid transfer unit 1.

The shell 3 comprises a shell body 31 and a pedestal 32, the liquid storage cavity and the air outlet passage 33 are disposed in the shell body 31, and the air inlet passage 34 is disposed in the pedestal 32. One end of the shell body 31 is open, and the sealing element 4 and the atomizing core 0 are disposed in the shell body 31.

The pedestal 32 is mounted at the open end of the shell body 31 and is connected to a lower side of the sealing element 4, such that the air inlet 15 of the liquid transfer unit 1 is sealed with respect to the air inlet passage 34 of the pedestal 32.

Referring to FIG. 2-FIG. 5, preferably, electrode connection holes 42 are formed in a side, facing the pedestal 32, of the sealing element 4, and the electrical connection parts 22 of the heating unit 2 are bent into the electrode connection holes 42. One end of each electrode 5 is inserted through the pedestal 32 and into one corresponding electrode connection hole 42, and is in contact and electrical connection with one corresponding electrical connection part 22, and the other end of each electrode 5 is disposed on the pedestal 32 for being electrically connected to an external circuit.

Referring to FIG. 6-FIG. 9, preferably, the base 11 comprises a first part 111 and a second part 112. The first part 111 and the second part 112 surround two opposite sides of the air guide part 12, respectively, and one end of the first part 111 and one end of the second part 112 are joined together and are connected to the air guide part 12.

Referring to FIG. 6 through FIG. 9, in some embodiments, in the air flow chamber 17, the heating part 21, the side wall of the air guide part 12 and the side wall of the base 11 conform to each other in shape and are all ring-shaped. The heating part 21 of the heating unit 2 is disposed on the side wall of the base 11, and the liquid inlet part 14 is disposed on an outer side of the base 11. The liquid inlet part 14 may be a liquid inlet recess formed in the outer side of the base 11.

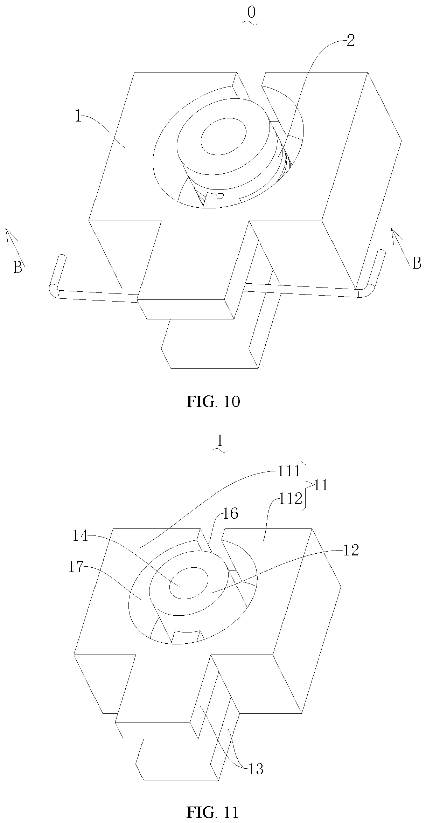

Referring to FIG. 10 through FIG. 13, in some other embodiments, in the air flow chamber 17, the heating part 21, the side wall of the air guide part 12 and the side wall of the base 11 conform to each other in shape and are all ring-shaped, and the heating part 21 of the heating unit 2 is disposed on the side wall of the air guide part 12. It can be understood that, in the air flow chamber 17, the heating part 21 may be disposed both on the side wall of the air guide part 12 and on the side wall of the base 11. The air inlet part 14 is a liquid inlet recess formed in an outer side of the air guide part 12.

In the above embodiments, preferably, the air inlet 15 is formed in a joint of the base 11 and the air guide part 12. The other end of the first part 111 and the other end of the second part 112 are free ends that are separated apart to define the air outlet 16.

Referring to FIG. 2 through FIG. 9, preferably, the shell 3 comprises a shell body 31 and a pedestal 32. The liquid storage cavity and the air outlet passage 33 are disposed in the shell body 31, the air inlet passage 34 is disposed in the pedestal 32, one end of the shell body 31 is open, the atomizing core 0 is disposed in the shell body 31, and the pedestal 32 is mounted at the open end of the shell body 31.

The air inlet 15 is formed in a lower side of the liquid transfer unit 1. The liquid transfer unit 1 comprises a support part 13, which is connected to the base 11 and/or the air guide part 12, protrudes downwards and is used for elevating the air inlet 15.

The shell 3 comprises a shell body 31 and a pedestal 32, one end of the shell body 31 is open, the atomizing core 0 is disposed in the shell body 31, and the pedestal 32 is mounted at the open end of the shell body 31.

The support part 13 downwardly presses against the pedestal 32 to space the air inlet 15 apart from the pedestal 32, such that the atomizing core 0 is supported, and is also elevated to expose the air inlet 15. The air guide part 12 makes an air flow vertically entering the atomizing core through the air inlet 15 move towards the atomization surfaces on two sides. The air guide part 12 is made of a porous material, such that atomized smoke in the air flow chamber 17 is unlikely to be condensed, and even if the atomized smoke is condensed, condensate can be reabsorbed by the liquid transfer unit 1.

From the above description, the atomizing core 0 provided by the invention has the following technical effects:

1. The air flow chamber 17 of the atomization device is determined by the structure of the liquid transfer unit 1 rather than being cooperatively determined by the liquid transfer unit 1 and other parts of the atomization device, so the atomization device has less structural parts and can be assembled easily and reliably; in assembly of the atomization device, the atomizing core 0 is placed in the sealing element 4 first and is then assembled with the pedestal 32, the liquid storage cavity is filled with liquid to be atomized, then the pedestal 32 is partially mounted in the shell body 31, and finally, the electrodes 5 are mounted.

2. Due to the fact that the air flow chamber 17 is disposed in the liquid transfer unit 1 made of a porous material and the heating part 21 of the heating unit 2 is disposed in the air flow chamber 17, the volume, flow rate and path of the air flow are determined mainly by the structure of the liquid transfer unit 1 without being affected by other parts and the assembly relation, thereby facilitating ensuring uniform atomization effect.

3. The liquid transfer unit 1 is made of a porous material, so the whole air flow chamber 17 is filled with the porous material, and condensate generated in the air flow chamber 17 can therefore be absorbed by the liquid transfer unit 1, thus effectively reducing the quantity of the condensate.

The above embodiments are merely preferred ones of the invention, and are not used to limit the invention. Those skilled in the art can make various modifications, combinations and changes to the invention. Any amendments, equivalent substitutions and improvements made based on the spirit and principle of the invention should fall within the scope of the claims.

## Claims

1. An atomization device, comprising a shell (3), an atomizing core (0) and electrodes (5), **characterized in that** a liquid storage cavity (35), an air inlet passage (34) and an air outlet passage (35) are disposed in the shell (3), the atomizing core (0) comprises a heating unit (2), and a liquid transfer unit (1) which is used for absorbing and transferring liquid (1) and is made of a porous material, the liquid transfer unit (1) comprises an air guide part (12), and a base (11) which is connected to and surrounds the air guide part (12), a gap between the air guide part (12) and the base (11) forms an air flow chamber (17), the liquid transfer unit (1) is provided with an air inlet (15) in communication with the air flow chamber (17), an air outlet (16) in communication with the air flow chamber (17), and a liquid inlet part (14) to be in contact with the liquid, the heating unit (2) comprises a heating part (21) which generates heat when energized, and electrical connection parts (22) which are connected to the heating part (21) for transmitting power to the heating part (21), the heating part (21) is disposed on an inner wall of the air flow chamber (17) and is in contact with the liquid transfer unit (1), the electrical connection parts (22) extend out of the air flow chamber (17), and the electrodes (5) are disposed on the shell (3), and each of the electrodes (5) has an end electrically connected to a corresponding one of the electrical connection parts (22) and an opposite end for being electrically connected to an external circuit;
wherein the liquid storage cavity (35) leads to the liquid inlet part (14) of the liquid transfer unit (1), the air inlet passage (34) is communicated with the air inlet (15), and the air outlet passage (33) is communicated with the air outlet (16), such that when the liquid inlet part (14) of the liquid transfer unit (1) contacts the liquid, the liquid is transferred by the liquid transfer unit (1) onto the heating part (21) and is heated to generate smoke, and an external air flow sequentially passes through the air inlet passage (34), the air inlet (15), the air flow chamber (17), the air outlet (16) and the air outlet passage (33) to take the smoke out of the atomization device.

2. The atomization device according to Claim 1, **characterized in that** the air flow chamber (17) is a ring space, or a ring space with angles.

3. The atomization device according to Claim 2, **characterized in that** the atomization device comprises a sealing element (4) disposed in the shell (3), at least one side of the air flow chamber (17) is open outwards, the sealing element (4) seals the open side of the air flow chamber (17) of the liquid transfer unit (1), and an air outlet connector (41) is disposed at a position, corresponding to the air outlet (16) of the liquid transfer unit (1), of the sealing element (4) and is connected to the air outlet passage (33) of the shell (3), thereby achieving communication and seal between the air outlet passage (33) and the air outlet (16).

4. The atomization device according to Claim 3, **characterized in that** along an axis surrounded by the air flow chamber (17), two sides of the air flow chamber (17) are open, a receiving cavity (43) is formed in the sealing element (4), the atomizing core (0) is disposed in the receiving cavity (43), and a wall of the receiving cavity (43) covers and seals the open side of the air flow chamber (17) of the liquid transfer unit (1).

5. The atomization device according to Claim 4, **characterized in that** the receiving cavity (43) of the sealing element (4) is open downwards, the atomizing core (0) is placed in the receiving cavity (43) through the opening of the receiving cavity (43), and the air inlet (15) is formed in a lower side of the liquid transfer unit (1);
wherein the shell (3) comprises a shell body (31) and a pedestal (32), the liquid storage cavity and the air outlet passage (33) are disposed in the shell body (31), the air inlet passage (34) is disposed in the pedestal (32), one end of the shell body (31) is open, and the sealing element (4) and the atomizing core (0) are disposed in the shell body (31); and
wherein the pedestal (32) is mounted at the open end of the shell body (31), and is connected to a lower side of the sealing element (4), such that the air inlet (15) is sealed with respect to the air inlet passage (34).

6. The atomization device according to Claim 5, **characterized in that** electrode connection holes (42) are formed in a side, facing the pedestal (32), of the sealing element (4), the electrical connection parts (22) of the heating unit (2) are bent into the electrode connection holes (42), and one end of each said electrode (5) is inserted through the pedestal (32) and into a corresponding one of the electrode connection holes (42) to be in contact and electrical connection with a corresponding one of the electrical connection parts (22).

7. The atomization device according to Claim 2, **characterized in that** the base (11) comprises a first part (111) and a second part (112), the first part (111) and the second part (112) surround two sides of the air guide part (12) respectively, and one end of the first part (111) and one end of the second part are joined together and are connected to the air guide part (12).

8. The atomization device according to Claim 7, **characterized in that** in the air flow chamber (17), the heating part (21) is disposed on the base (11), and the liquid inlet part (14) is disposed on an outer side of the base (11).

9. The atomization device according to Claim 8, **characterized in that** the air inlet part (14) is a liquid inlet recess formed in the outer side of the base (11).

10. The atomization device according to Claim 7, **characterized in that** in the air flow chamber (17), the heating part (21) is disposed on the air guide part (12).

11. The atomization device according to Claim 10, **characterized in that** the liquid inlet part (14) is a liquid inlet recess formed in an outer side of the air guide part (12).

12. The atomization device according to Claim 7, **characterized in that** the air inlet (15) is formed in a joint of the base (11) and the air guide part (12).

13. The atomization device according to Claim 7, **characterized in that** the other end of the first part (111) and the other end of the second part (112) cooperatively define the air outlet (16).

14. The atomization device according to Claim 7, **characterized in that** the shell (3) comprises a shell body (31) and a pedestal (32), the liquid storage cavity and the air outlet passage (33) are disposed in the shell body (31), the air inlet passage (34) is disposed in the pedestal (32), one end of the shell body (31) is open, the atomizing core (0) is disposed in the shell body (31), and the pedestal (32) is disposed at the open end of the shell body (31);
wherein the air inlet (15) is formed in a lower side of the liquid transfer unit (1), the liquid transfer unit (1) comprises a support part (13) which is connected to the base (11) and/or the air guide part (12), protrudes downwards and is used for elevating the air inlet (15);
wherein the shell (3) comprises a shell body (31) and a pedestal (32), one end of the shell body (31) is open, the atomizing core (0) is disposed on the shell body (31), and the pedestal (32) is disposed at the open end of the shell body (31);
wherein the support part (13) downwards presses against the pedestal (32) to space the air inlet (15) apart from the pedestal (32).
